# FASCICULE DE BREVET EUROPEEN

(11) **EP 1 809 525 B1**
(45) Date de publication et mention de la délivrance du brevet: **28.07.2010**
(21) Numéro de dépôt: 05802665.9
(22) Date de dépôt: 22.09.2005
(51) Int. Cl.: B62B 15/00, B63B 35/79

(54) **VEHICULE AMPHIBIE PROPULSE PAR LA FORCE DU VENT OU AUTRE, MUNI DE ROUES ET D'UN MOYEN DE FLOTTAISON.**
DURCH WIND ODER EINE ANDERE KRAFT ANGETRIEBENES AMPHIBIENFAHRZEUG, DAS MIT RÄDERN UND EINEM FLOTATIONSMITTEL AUSGESTATTET IST
AMPHIBIOUS VEHICLE WHICH IS PROPELLED BY WIND OR ANOTHER FORCE AND WHICH IS EQUIPPED WITH WHEELS AND A FLOATATION MEANS

(30) Priorité: 23.09.2004 FR 0410056
(43) Date de publication de la demande: 25.07.2007
(73) Titulaire: LOD, 75014 Paris (FR)
(72) Inventeur: LANGINIEUX, Martin, F-75014 Paris (FR)
(74) Mandataire: Corret, Hélène
(86) Numéro de dépôt international: PCT/FR2005/002350
(87) Numéro de publication internationale: WO 2006/032791

(56) Documents cités:
- EP-A- 0 176 458
- CH-A- 97 187
- FR-A- 911 806
- FR-A- 2 537 508
- GB-A- 1 288 779
- GB-A- 2 293 581
- US-A- 3 895 597
- US-A- 4 387 661
- US-A- 4 838 194
- US-A- 5 832 862

## Description

L'invention se rapporte à un véhicule propulsé par la force du vent ou autre, muni de roues ainsi que d'un moyen de flottaison, en particulier un char à voile amphibie.

Un tel véhicule est décrit dans le document CH97187 qui contient toutes les caractéristiques du préambule de la revendication 1.

Il existe une multitude de sports et de loisirs qu'il est possible de pratiquer au bord de l'eau ou sur l'eau, que ce soit sur un lac, un bassin artificiel, l'océan, la mer, un fleuve ou une rivière. Parmi eux, il existe des sports ou loisirs qui se pratiquent uniquement sur/dans l'eau, tels que le dériveur, le catamaran, le voilier, la planche à voile ou, plus récemment, le kite-surf. Concernant les sports ou loisirs qui se pratiquent hors de l'eau, en particulier sur le sable d'une plage, il existe notamment le speed-sail, le char à voile ou le cerf-volant.

Tous ces sports ou loisirs ont pour point commun d'avoir la force du vent comme moyen de propulsion, que celle-ci s'exerce sur une voile tendue sur un mât, comme pour la planche à voile, le dériveur, le catamaran, le voilier, le speed-sail ou le char à voile, ou sur une voile tendue par des ficelles/suspentes comme pour le cerf-volant ou le kite-surf.

Malgré tout l'intérêt que présentent ces sports ou loisirs du point de vue du plaisir procuré (sensations sportives intenses, voire extrêmes, vitesse, contact avec les éléments naturels), aucun d'entre eux ne permet réellement de profiter aussi bien de l'eau que du sol ferme, par exemple de la mer et du sable.

Ainsi, l'invention se propose de répondre à ce besoin de créer un matériel qui puisse être capable de passer très facilement d'un milieu terrestre à un milieu aquatique et vice versa, qui soit maniable, agréable à utiliser, performant, source de sensations, facile à monter/démonter, fiable et peu encombrant.

Plus précisément, la présente invention se rapporte à un véhicule amphibie propulsé par la force du vent comprenant au moins :
- un châssis rigide,
- au moins deux roues liées au châssis,
- un système de direction,
ledit véhicule comprenant en outre au moins un moyen de flottaison assurant l'insubmersibilité dudit véhicule une fois celui-ci immergé dans l'eau.

Avantageusement, le moyen de flottaison comprend au moins un flotteur lié ou intégré au châssis et présentant une ligne de flottaison.

De manière préférentielle, les surfaces de contact des roues reposant sur un sol ferme définissant un plan de référence, le moyen de flottaison présente une ligne de flottaison inclinée par rapport à ce plan de sorte qu'une fois le véhicule immergé, au moins une roue est déjaugée hors de l'eau sous l'effet de la pression exercée par l'eau sur ledit moyen de flottaison.

Ainsi, les frottements des roues dans l'eau, notamment à cause du sillage créé à sa surface, sont minimisés, tout en évitant la présence de moyens mécaniques de levage contraignants à manipuler pour l'utilisateur, coûteux à fabriquer, fragiles et éventuellement dangereux.

Selon un premier mode de réalisation préféré de la présente invention :
- les roues sont réparties, dans le sens de déplacement normal vers l'avant du véhicule, en une roue arrière directrice reliée au système de direction et deux roues avant, les roues avant étant déjaugées au-dessus de la ligne de flottaison lorsque le véhicule est immergé ;
- la roue arrière est pleine pour former un gouvernail en position de flottaison du véhicule, et suffisamment fine et profilée pour minimiser son sillage dans l'eau ;
- le moyen de flottaison comprend deux flotteurs creux longitudinaux disposés de part et d'autre du châssis ;
- le châssis est tubulaire et comprend des tubes longitudinaux latéraux, un tube arrière, et deux barres transversales parallèles au tube arrière ;
- un trampoline est tendu entre les tubes du châssis tubulaire pour former une assise multi positions ;
- le moyen de direction comprend un palonnier réglable le long d'un rail et relié à une fourche de la roue arrière par l'intermédiaire de câbles tendus passant dans des anneaux.

Selon un deuxième mode de réalisation préféré de la présente invention :
- les roues sont réparties, dans le sens de déplacement normal vers l'avant du véhicule, en une roue avant directrice, et deux roues arrière, la roue avant étant déjaugée au-dessus de la ligne de flottaison lorsque le véhicule est immergé ;

- le moyen de flottaison et le châssis forment une seule pièce creuse ;
- une assise multi positions est intégrée dans le châssis, notamment par moulage ;
- l'arrière du châssis est munie d'un gouvernail escamotable disposé sensiblement entre les roues arrière ;
- les roues arrière sont intégrées dans le châssis et/ou le moyen de flottaison.

Selon des variantes de réalisation de ces deux modes :
- le moyen de flottaison et/ou le châssis est(sont) réalisé(s) en matériau plastique moulable, en particulier en matériau composite ;
- le véhicule comprend en outre au moins une hélice de propulsion motorisée, par exemple une hélice sous-marine de propulsion d'eau positionnée sous la ligne de flottaison et/ou une hélice sub-marine de propulsion d'air positionnée au-dessus de la ligne de flottaison ;
- le véhicule comprend également un pédalier relié à au moins une roue de propulsion du véhicule sur terre et/ou dans l'eau ;
- le véhicule comprend par ailleurs des suspentes et un cerf-volant de propulsion ;
- le châssis est fermé par une coque de protection étanche à l'eau réalisée notamment en matière plastique transparente ;
- le châssis et/ou le moyen de flottaison présente(nt) au moins une dérive de stabilité.

D'autres caractéristiques, détails et avantages de l'invention ressortiront à la lecture de la description qui suit, faite en référence aux dessins annexés donnés à titre d'exemple et qui représentent respectivement :
- la figure 1, une vue de dessus d'un premier mode de réalisation d'un véhicule selon la présente invention,
- la figure 2, une vue de côté du véhicule de la figure 1,
- la figure 3, une vue de derrière du véhicule de la figure 1,
- la figure 4, une vue de face du véhicule de la figure 1,
- la figure 5, une vue de côté similaire à la figure 2 dans laquelle le véhicule est immergé dans l'eau,
- la figure 6, une vue de dessus d'un second mode de réalisation du véhicule selon la présente invention,
- la figure 7 une vue de côté du véhicule de la figure 6,
- la figure 8 une vue de face du véhicule de la figure 6,
- la figure 9 une vue de côté similaire à la figure 7 dans laquelle le véhicule est immergé,
- la figure 10, une vue de face de la figure 9,
- les figures 11 et 12, des vues de dessus et de côté d'un troisième mode de réalisation de l'invention, et
- les figures 13 et 14, des vues de côté d'un quatrième mode de réalisation de l'invention, respectivement sur un sol ferme et dans l'eau.

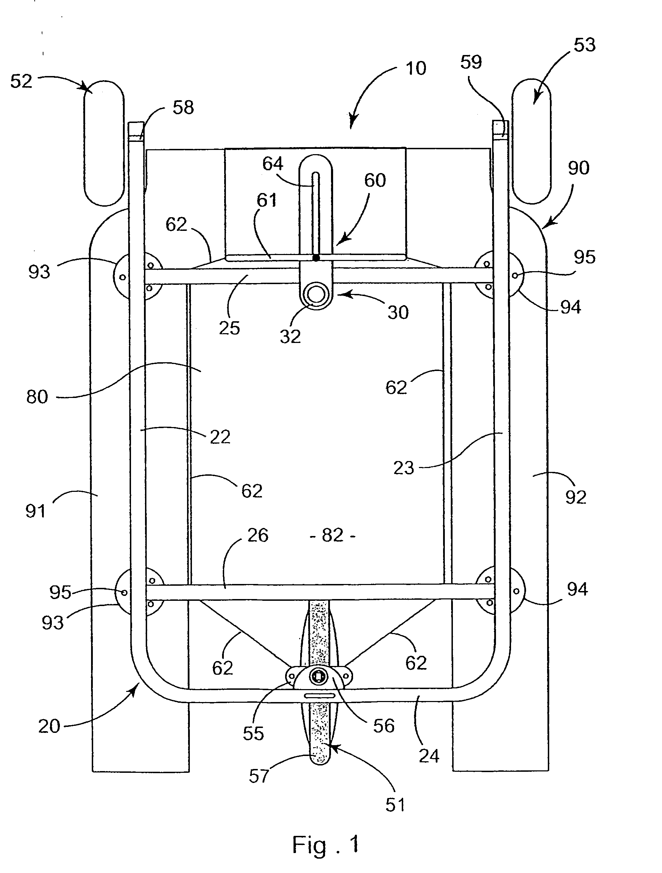

Les figures 1 à 5 représentent un premier mode de réalisation d'un véhicule roulant 10 propulsé par la force du vent conformément à la présente invention.

Plus précisément, il s'agit d'un char à voile amphibie comprenant à cet effet un châssis tubulaire 20 rigide, par exemple réalisé en métal résistant à la corrosion (notamment saline) tel que de l'acier inox ou de l'aluminium. Le châssis tubulaire 20 comprend un tube creux doublement cintré à 90° formant deux tubes longitudinaux latéraux 22 et 23 parallèles entre eux et un tube arrière 24. Le châssis comprend également deux barres ou tubes transversaux de renfort respectivement avant 25 et intermédiaire 26, fixés, par exemple par soudure ou brasage, aux tubes latéraux 22 et 23, parallèlement au tube arrière 24.

Typiquement, le châssis tubulaire rigide 20 mesure environ 1875 mm de longueur pour environ 1150 mm de largeur. Les tubes transversaux de renfort 25 et 26 sont espacés l'un de l'autre de 1025 mm et mesurent 1050 mm de largeur. La barre intermédiaire de renfort 26 est située à environ 325 mm du tube arrière 24, et la barre transversale avant de renfort 25 est située à environ 475 mm de l'extrémité des tubes latéraux 22 et 23 du châssis 20.

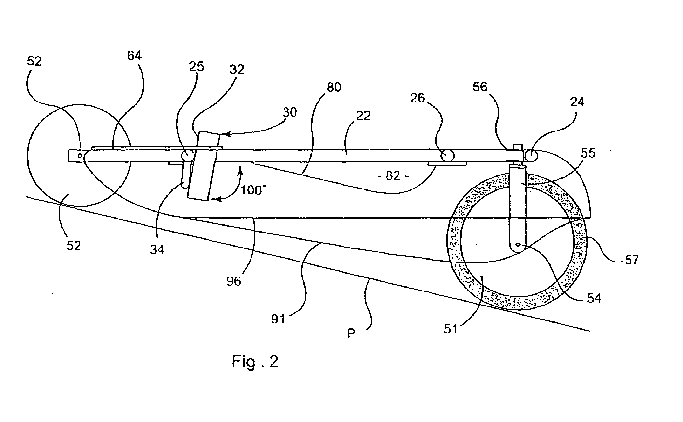

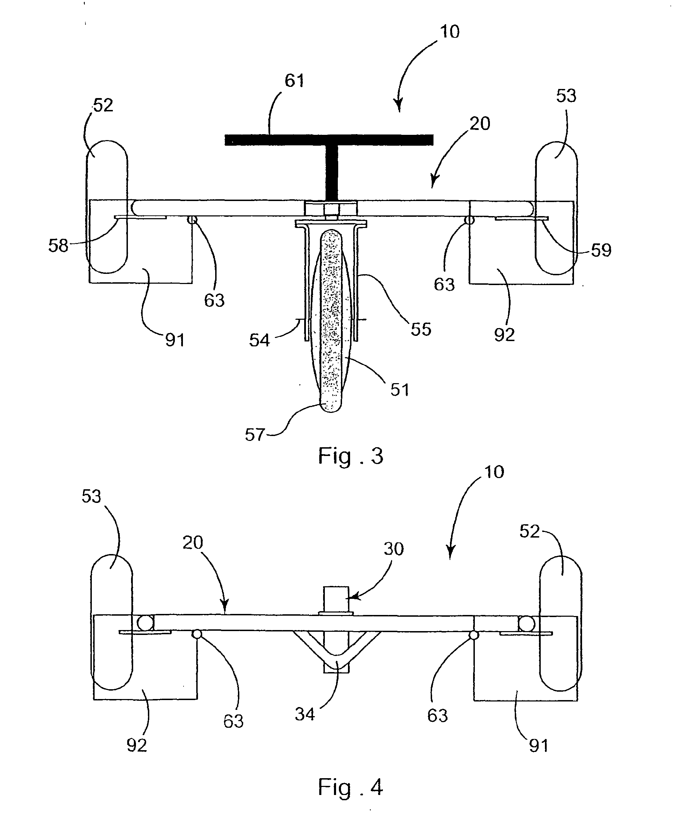

Le châssis 20 comporte également un pied de mât 30 soudé au centre de la barre transversale avant 25 et faisant un angle d'environ 100° avec le châssis (voir figure 2) de manière à être incliné vers l'arrière. Le pied de mât 30 comprend un tube creux 32 de 70mm diamètre et de 250 m de longueur susceptible de recevoir un mât (non représenté) en métal tel que de aluminium, ou en matériau composite, ledit mât supportant une voilure de type connue (non représentée), telle qu'une voile de planche à voile ou de char à voile en matériau synthétique. Des éléments de tension de la voile, tels que des poulies et des cordes (non représentées), sont également prévus pour manoeuvrer le char à voile en fonction du vent, tant que sur un sol ferme tel que du sable, que sur l'eau. Le pied de mât 30 présente également un renfort 34 se présentant sous la forme d'un tube cintré soudé à la fois sur le tube creux 32 du pied de mât 30 et sur le tube transversal avant 25 (voir figure 4).

Le châssis 20 est muni de trois roues réparties, par rapport au sens de déplacement habituel du char de l'arrière vers l'avant, en une roue arrière directrice 51 et deux roues avant 52 et 53. La roue arrière directrice 51 est montée en rotation autour d'un axe 54 sur une fourche profilée 55 en acier inoxydable ou en aluminium, elle-même montée pivotante sur une platine rigide 56 soudée au centre du tube arrière 24. La fourche 55 mesure typiquement environ 360 mm de hauteur (voir figure 3). La roue arrière 51 réalisée en aluminium est fine, pleine et profilée pour faire office de gouvernail une fois le char à voile 10 immergé. Cette roue arrière 51 est munie d'un pneu 57 à chambre à air et elle mesure environ 560 mm de diamètre pour 110 mm d'épaisseur au niveau de son axe de rotation 54. Les roues avant 52 et 53 sont montées en rotation respectivement autour d'axes 58 et 59, de part et d'autre des tubes latéraux 22 et 23. Les axes 58 et 59 sont situés à sensiblement 45 mm de l'extrémité de chacun desdits tubes latéraux. Les roues avant 52 et 53 sont à moyeu en matière plastique muni d'un pneu à chambre à air de type « boudin », et mesurent chacune environ 400 mm de diamètre pour 200 mm de largeur afin d'avoir une bonne tenue au sol, notamment dans un usage sportif.

Du fait de la différence de diamètre entre les roues avant et la roue arrière, la partie avant du châssis 20, c'est-à-dire proche de l'extrémité des tubes latéraux 22 et 23, est située à environ 20 cm du sol, tandis que la partie arrière du châssis 20, c'est-à-dire proche du tube arrière 24, est à plus de 50 cm du sol. Ainsi, le châssis 20 du char à voile 10 de la présente invention est incliné par rapport au plan P de référence défini par le contact des trois roues avec le sol.

Un système de direction 60 est prévu afin de coopérer avec la roue arrière directrice 51. Pour cela, un palonnier 61, manipulable par les pieds de l'utilisateur, est relié directement à la fourche 55 de la roue arrière 51 par l'intermédiaire de deux câbles 62 tendus passant au travers d'anneaux 63 soudés sous les barres transversales de renfort 25 et 26 (voir figures 1, 3 et 4). Le palonnier 61 est par ailleurs monté coulissant sur un rail 64 longitudinal afin de pouvoir être réglé en fonction de la longueur des jambes de l'utilisateur et/ou de sa position sur le char à voile 10.

Un trampoline 80 de type connu, par exemple en tissu synthétique renforcé laissant passer l'eau, est tendu entre les tubes latéraux 22 et 23, le tube avant 25 et le tube intermédiaire 26 du châssis tubulaire 20. Ce trampoline 80 fait ainsi office de zone confortable d'assise multi positions 82 pour au moins un utilisateur, voire deux, à la façon d'un catamaran. Les dimensions du trampoline sont d'environ 1850 mm de longueur sur 800 mm de largeur.

Afin de faire en sorte que le char à voile 10 de la présente invention soit amphibie, c'est-à-dire insubmersible, des moyens de flottaison 90 sont liés au châssis tubulaire 20. Plus précisément, deux flotteurs creux 91 et 92 à fond sensiblement plat sont disposés sous le châssis 20, partiellement de part et d'autre des tubes latéraux 22 et 23, comme cela est visible notamment sur les figures 1 et 3. Ces flotteurs 91 et 92 sont constitués chacun par un volume creux en matière plastique moulée par injection, par injection gonflage, ou par rotomoulage, telle que du polyester ou un matériau composite par exemple à base de fibre de verre, de carbone ou de kevlar. Chaque flotteur 91 ou 92 est fixé à un tube latéral 22 ou 23 par l'intermédiaire de deux paires 93 et 94 de platines circulaire soudées au châssis tubulaire 20, à la jonction entre les tubes latéraux et les barres transversales de renfort. Chaque platine 93 ou 94 est réalisée en acier inoxydable ou en aluminium, et présente un diamètre d'environ 150 mm ainsi que des orifices 95 de passage de vis de fixation aux flotteurs 91 et 92. Comme cela est visible sur la figure 2, le véhicule présente par ailleurs une ligne de flottaison 96 qui est inclinée par rapport au plan de référence P.

La longueur hors tout du char à voile 10, c'est-à-dire de l'axe de la roue arrière 51 à l'axe des roues avant 52 et 53, est d'environ 2200 mm.

Grâce aux flotteurs 91 et 92, le char à voile 10 de la présente invention peut passer directement d'une position d'utilisation sur un terrain ferme, tel par exemple qu'une route bitumée ou, plus fréquemment, une plage de sable, à une position d'utilisation sur l'eau (lac, mer, océan, rivière, bassin... ), et ce sans aucune manipulation de quelque sorte que ce soit pour l'utilisateur. Ainsi, le passage d'un mode de déplacement par roulage à un mode de déplacement par flottaison, et réciproquement, est immédiat, et s'effectue simplement grâce à la force du vent soufflant dans la voile pour faire avancer le char 10.

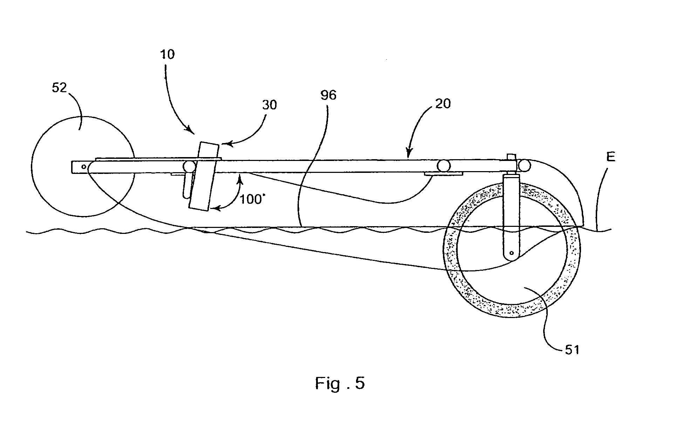

A mesure que le char à voile 10 avance dans l'eau, les flotteurs 91 et 92 basculent petit à petit en pivotant sur eux-mêmes autour d'un axe virtuel sensiblement perpendiculaire à la direction principale d'allongement du char, de sorte que les roues avant 52 et 53 se trouvent complètement et automatiquement déjaugées au-dessus du niveau de l'eau, comme cela est représenté sur la figure 5. En effet, l'entrée du char à voile 10 dans l'eau provoque un déplacement de masse vers le centre de gravité des flotteurs qui se situe vers l'arrière du châssis tubulaire 20 en raison de la forme particulière desdits flotteurs 91 et 92. Ainsi, l'avant du char 10 se soulève de plusieurs centimètres ou dizaines de centimètres de sorte que la ligne de flottaison 96 (illustrée sur la figure 2) de chaque flotteur 91 et 92 coïncide sensiblement avec le niveau E de l'eau et soit surtout située en dessous du bas des roues avant 52 et 53 pour éviter qu'elles n'entrent en contact avec l'eau.

La combinaison de la forme des flotteurs 91 et 92, de l'inclinaison de la ligne de flottaison 96, et de la différence de diamètre des roues avant et arrière permet ainsi aux roues avant 52 et 53 de se trouver nettement au-dessus du niveau E de l'eau en position d'utilisation nautique du char à voile 10, ce qui réduit considérablement le sillage et donc le frottement susceptible de freiner le véhicule. Un gain important en performance est donc obtenu de cette façon.

Par contre, la roue arrière 51, fine, pleine et reliée au système de direction « terrestre », est située en partie sous la ligne de flottaison 96 et sert de gouvernail pour orienter le char à voile 10 dans l'eau. Ainsi, l'utilisateur peut facilement diriger le char à voile amphibie à l'aide du palonnier 61 dans son utilisation nautique.

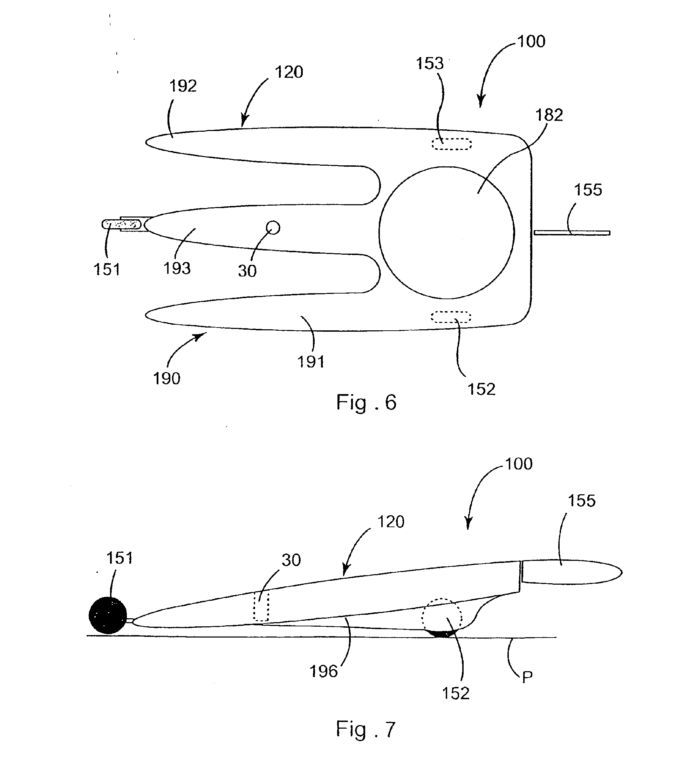

Les figures 6 à 10 illustrent un deuxième mode de réalisation préféré du char à voile amphibie de la présente invention.

Dans ce mode de réalisation, le char à voile 100 diffère essentiellement du premier mode de réalisation des figures 1 à 5 en ce qu'il comprend un châssis 120 entièrement flottant et un moyen de flottaison 190 formé par trois flotteurs 191, 192 et 193 moulés d'une seule pièce en matière plastique creuse avec ledit châssis 120. Cette solution, plus facile et plus rapide à mettre en oeuvre, permet également de créer des formes très variables tout en allégeant la structure du véhicule sans perdre la caractéristique de rigidité propre au châssis.

Une zone d'assise multi positions 182, disposée par exemple à l'arrière et au centre du char à voile 100, est intégrée de moulage au châssis 120. Cette zone reçoit une ou plusieurs personnes selon les dimensions du char 100.

Le char à voile 100 présente également un pied de mât 130 incliné qui est également intégré de moulage dans le châssis 120 et qui peut en option être renforcé intérieurement par un tube rigide (non représenté). Ce pied de mât peut recevoir le même type de mât et de voile que dans le mode de réalisation précédent.

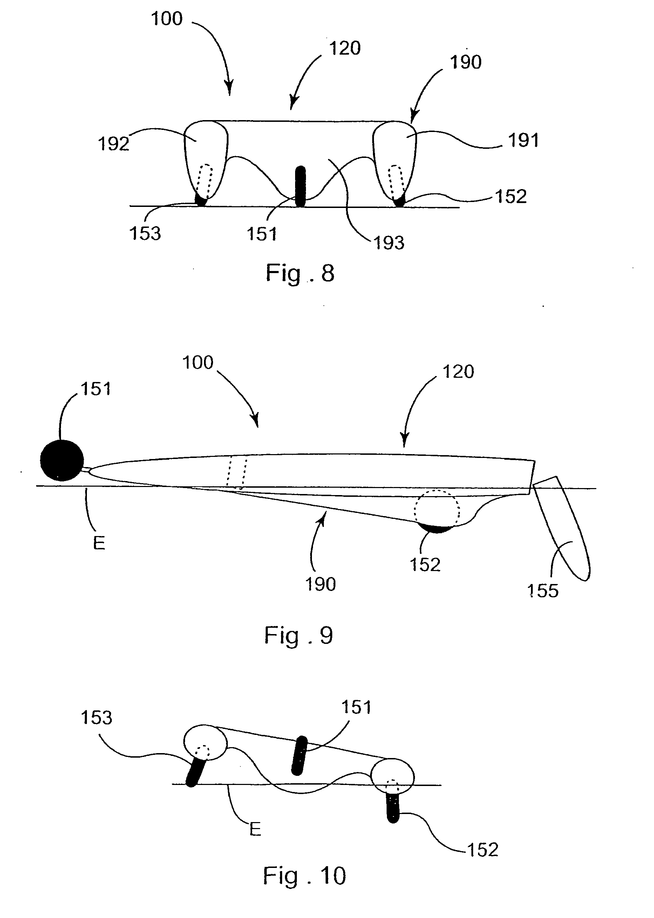

La seconde différence importante entre ce deuxième mode de réalisation et le premier mode, est que le char à voile 100 présente une roue avant 151 directrice et deux roues arrière 152 et 153. La roue avant est placée à l'extrémité du flotteur central 193, et les roues arrière 152 et 153 sont intégrées sous les flotteurs latéraux 191 et 192, à l'arrière du char (voir figure 8). Un système de palonnier (non représenté) est également prévu pour manoeuvrer la roue avant directrice 151 sur sol ferme. Un gouvernail escamotable 155 est également monté à l'arrière du châssis 120 afin de manoeuvrer le char à voile 110 une fois celui-ci dans l'eau. Le char présente également une ligne de flottaison 196 inclinée par rapport au plan de référence P défini par les trois roues 151, 152 et 153 lorsqu'il est en position d'utilisation sur sol ferme, comme cela est illustré par la figure 7. Le char à voile du deuxième mode de réalisation mesure environ 3000 mm de longueur sur 1600 mm de largeur.

Lorsque le char à voile 100 quitte le sol ferme, par exemple une plage de sable, et avance dans l'eau, le châssis 120 bascule petit à petit vers l'arrière en raison de l'effet de la pression de l'eau s'exerçant sur les flotteurs 191, 192 et 193, et de la forme particulière de ceux-ci. Ainsi, la partie avant du véhicule se relève afin de déjauger automatiquement la roue avant 151 qui sors alors complètement au-dessus du niveau E de l'eau, comme cela est illustré par la figure 9. Le châssis 120 flotte et sa ligne de flottaison 196 coïncide sensiblement avec le niveau de l'eau E. Dans le même temps, le gouvernail 155 plonge dans l'eau, soit automatiquement du fait du basculement du châssis 120, soit manuellement à l'aide d'une articulation.

La manipulation de ce char à voile 100 est similaire à celle du char à voile 10 du premier mode de réalisation. L'utilisateur est assis dans la zone d'assise 182. En position d'utilisation sur un sol ferme tel qu'une plage, l'utilisateur fait tourner la roue avant 151 par exemple à l'aide d'un palonnier (non représenté) tout en tendant et orientant la voile. En position de navigation sur l'eau, l'utilisateur utilise le gouvernail 155 à la main à l'aide par exemple d'une barre (non représentée), toujours en tendant et orientant la voile.

Lors d'un vent de force importante, ou bien dans un virage serré, le châssis 120 peut gîter à bâbord ou à tribord de telle sorte qu'une des roues arrière 152 ou 153 peut se retrouver également au-dessus du niveau E de l'eau (voir figure 10), ce qui réduit encore les frottements dans l'eau dus au sillage. Cela permet également à l'utilisateur de réaliser des figures acrobatiques sans perte de maniabilité, de vitesse ou de stabilité du véhicule. Ainsi, la réduction du sillage du véhicule dans l'eau due au déjaugeage de la roue avant permet d'améliorer ses performances en vitesse.

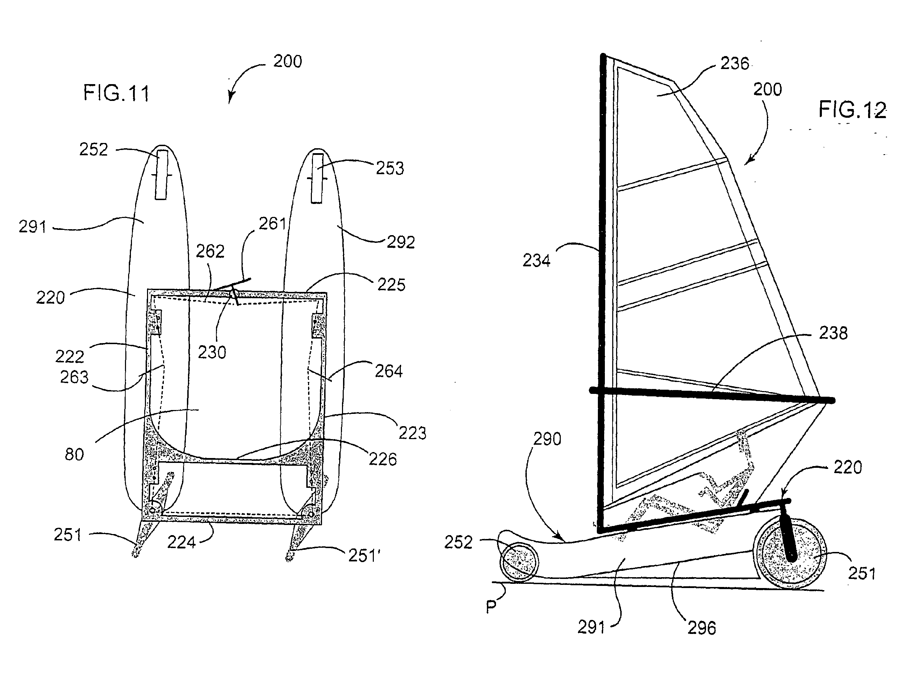

Les figures 11 et 12 illustrent un troisième mode de réalisation du véhicule amphibie conforme à la présente invention. Dans ce troisième mode de réalisation, qui reprend notamment des solutions technologiques des premier et second modes de réalisation, le char à voile 200 comprend un moyen de flottaison 290 muni de deux flotteurs creux allongés 291 et 292 reliés parallèlement l'un à l'autre par l'intermédiaire d'un châssis tubulaire 220 supérieur en acier inoxydable ou en aluminium.

Comme dans le mode de réalisation des figures 1 à 5, le châssis 220 est constitué par deux tubes latéraux 222 et 223, un tube arrière 224, un tube avant 225 et un tube intermédiaire 226, lesquels sont fermement fixés les uns aux autres, par exemple par soudage, pour former un cadre rectangulaire plan. Un trampoline 80 est tendu entre les tubes 222, 223, 225 et 226, pour former une assise confortable à l'utilisateur.

Deux fines roues arrière directrices 251 et 251', et non plus une seule, sont fixées aux coins arrière du châssis tubulaire 220, sensiblement à la liaison entre le tube arrière 224 et les tubes latéraux 222 et 223. Ces roues arrière directrices 151 et 151' permettent d'orienter le char à voile 200 lors de son déplacement sur sol ferme ou dans l'eau.

Dans sa partie avant, le véhicule 200 est muni de roues avant 252 et 253 non directrices qui sont intégrées respectivement dans chacun des flotteurs 291 et 292. Le véhicule 200 présente donc quatre roues, au contraire des deux modes de réalisation précédents qui n'en possèdent que trois.

Le véhicule 200, et en particulier les flotteurs 291 et 292, présente une ligne de flottaison 296 qui est inclinée par rapport au plan de référence P défini par les surfaces de contact des roues du véhicule lorsqu'il repose sur un sol ferme (voir figure 12).

Le châssis 220 est également pourvu, sensiblement au milieu du tube avant 225, d'un tube creux formant un pied 230 pour recevoir le mât 234 d'une voilure telle qu'une voile standard de planche à voile 236, c'est-à-dire une voile articulée munie d'un wishbone 238.

Un palonnier 261, actionnable par les pieds de l'utilisateur, est monté de manière articulée sur le tube avant 225 du châssis 220. Le palonnier 261 est relié à un câble 262 longeant les tubes 222, 223, 224 et 225 en boucle fermée pour commander les deux roues arrière directrices 251 et 251' à l'aide de gouvernes latérales de renvoi 263 et 264.

Lorsque le char à voile 200 circule sur un sol ferme, tel que le sable d'une plage, il peut rouler sur ses quatre roues et être propulsé par la force du vent soufflant dans la voile 236. La manipulation du palonnier 261 permet de tourner aisément les roues arrière 251 et 251' pour orienter le char.

Une fois dans l'eau, grâce à l'inclinaison de la ligne de flottaison 296, les roues avant 252 et 253 du véhicule 200 sont automatiquement et complètement déjaugées au-dessus du niveau de l'eau E par basculement des flotteurs 291 et 292 subissant la poussée de l'eau. Ainsi, les roues avant 252 et 253 ne créent aucun sillage pouvant ralentir le véhicule. Seules les deux fines roues arrière profilées 151 et 151' restent immergées et servent alors de gouvernail lorsque le véhicule avance dans l'eau grâce à la force du vent.

Le véhicule mesure typiquement, hors tout, une longueur d'environ 3 m et une largeur d'environ 1,50m.

Selon des variantes de réalisation, le mât et la voile peuvent être remplacés par, ou collaborer avec, un autre mode de propulsion, tel qu'un mode de propulsion mécanique, par exemple un moteur électrique ou à combustion, un propulseur à air liquide ou à hydrogène, ou équivalent. Ainsi, le châssis peut supporter une hélice sous-marine de propulsion d'air placée sous la ligne de flottaison et/ou une hélice sub-marine de propulsion de l'eau placée au-dessus de la ligne de flottaison, afin de pallier le manque de vent ou pour aller plus vite.

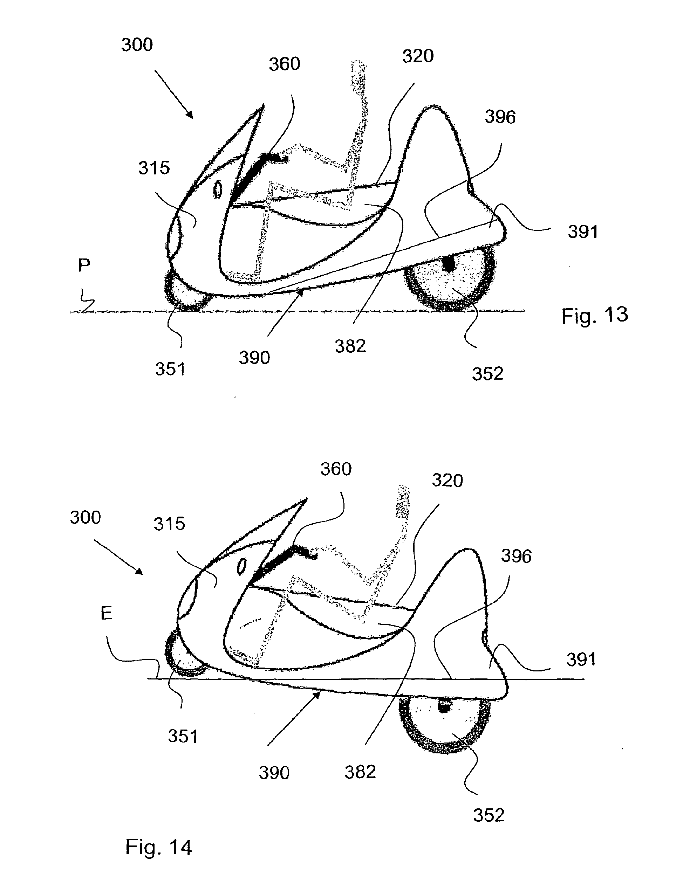

Les figures 13 et 14 illustrent un quatrième mode de réalisation de l'invention se matérialisant sous la forme d'un véhicule motorisé amphibie 300 tel qu'un scooter des mers ou un jet ski. Ce véhicule 300 comprend un châssis rigide central 320, par exemple un châssis tubulaire du type de ceux qui équipent certaines motos, supportant localement un carénage 315, une zone d'assise 382 et un moyen de flottaison 390 se présentant par exemple sous la forme d'un flotteurs 391.

Le châssis 320 supporte également une ou deux roues avant directrice(s) 351 reliée(s) à un guidon 360 et une roue arrière de propulsion 352 reliée à un moteur (non représenté car masqué derrière le carénage) de type à combustion, électrique, à air comprimé, à hydrogène ou équivalent. Ainsi, comme cela est décrit plus loin, le véhicule 300 est également un scooter terrestre pouvant rouler sur un sol ferme tel qu'une route, un chemin de terre ou une plage de sable. La roue arrière 352 intégrée dans le flotteur est pleine, suffisamment fine et profilée pour minimiser son sillage dans l'eau, et elle présente également un diamètre notablement plus important que celui de la roue avant. Elle peut le cas échéant être actionnée pour former un gouvernail en position de flottaison du véhicule.

Le flotteur 391 présente des dimensions, en particulier largeur et longueur, adaptées pour assurer une stabilité du véhicule 300 dans son utilisation nautique et un gabarit, notamment en largeur, suffisamment réduit afin de ne pas nuire à une utilisation sur route et respecter les normes en vigueur pour ce type de véhicule. Le flotteur 391 présente également une ligne de flottaison 396 inclinée par rapport au plan P de contact avec les roues 351 et 352 lorsque le véhicule est en mode d'utilisation terrestre (figure 13).

Lorsque le véhicule amphibie 300 quitte le sol pour aller dans l'eau, le flotteur 391 bascule vers l'arrière et l'avant du véhicule remonte de sorte que la ligne de flottaison 396 coïncide sensiblement avec la surface de l'eau E (figure 14). Ce mouvement de basculement provoque le déjaugeage de la roue avant 351 totalement au-dessus de l'eau de sorte que celle-ci ne provoque aucun sillage néfaste au déplacement du véhicule en mode d'utilisation nautique. Le véhicule 300 présente également à cet effet des moyens de propulsion d'eau tel qu'une turbine sous-marine qui est soit directement liée au moteur de la roue arrière 352, soit indépendante de celui-ci. Le véhicule 300 peut par ailleurs présenter un gouvernail arrière articulé qui s'escamote par exemple dans le carénage ou dans le flotteur en utilisation terrestre.

Le passage de l'eau à la terre est réalisé sans modification du véhicule sauf à passer de la propulsion sous-marine à la propulsion de la roue arrière lorsque celle-ci entre en contact avec un sol ferme.

Une variante entraînerait une roue à aubes à l'arrière du véhicule permettant une propulsion unique dans l'eau et sur le sol.

Il doit être bien entendu toutefois que la description détaillée, donnée uniquement à titre d'illustration de l'objet de l'Invention, ne constitue en aucune manière une limitation, les équivalents techniques étant également compris dans le champ de la présente invention.

Ainsi, le châssis peut être relié à un cerf-volant via des suspentes, ou présenter plusieurs mâts/voiles côte à côte.

Le châssis peut aussi être fermé par une coque rigide de protection étanche à l'eau, réalisée par exemple en matière plastique transparente. Cette solution permet de protéger l'utilisateur des intempéries et des chocs.

Un pédalier peut en outre être relié aux roues avant et/ou arrière en utilisation terrestre, et éventuellement à une roue à aube escamotable en utilisation nautique.

Des moyens de levage d'au moins une roue au-dessus de la ligne de flottaison du char à voile peuvent également être prévus en supplément. Ces moyens peuvent par exemple comprendre un piston électrique, hydraulique ou pneumatique, ou bien un système à levier, came ou engrenage.

Dans le premier et le troisième mode de réalisation de l'invention, le nombre de flotteurs peut être supérieur à deux, par exemple trois ou quatre. Dans le cas de trois flotteurs, le troisième flotteur peut être placé à l'avant ou à l'arrière du véhicule pour augmenter la flottaison de ce dernier et participer à l'élévation de la roue avant. Dans le cas où le véhicule présente quatre flotteurs, il est préférable de disposer les deux flotteurs supplémentaires respectivement devant et derrière.

Le trampoline 80 peut être remplacé par un tissu souple et solide tendu entre les tubes latéraux et arrière du châssis, par exemple une toile munie d'orifices laissant s'écouler l'eau, par exemple à base de nylon ou de kevlar.

Le système de direction à palonnier peut être remplacé par une commande manuelle à prise directe telle par exemple qu'un manche (non représenté) pouvant être mis en prise avec la fourche 55.

Le cadre tubulaire des figures 1 à 5 et 11 à 12 peut être d'une seule pièce, réalisé en métal par fonderie ou en matériau composite.

Les dimensions du char à voile ne sont données qu'à titre indicatif illustrant uniquement les modes de réalisation décrits. Ainsi, celui-ci peut mesurer entre 1500 et 4000 mm de longueur et entre 1000 et 2500 mm de largeur.

La présente invention est également adaptée au domaine des véhicules de loisirs tels que les voitures amphibie berlines ou décapotables, au domaine des véhicules militaires tels que les véhicules d'intervention éventuellement tout terrain, ou encore au domaine des véhicules de la police maritime ou des pompiers tels que les bateaux à structure gonflable. Bien entendu, le véhicule de la présente invention respectera les normes en vigueur, notamment en terme de sécurité des occupants, de signalisation, de confort ou de pollution.

## Revendications

1. Véhicule roulant (10 ; 100 ; 200 ; 300) propulsé par la force du vent ou autre, comprenant au moins :
- un châssis rigide (20 ; 120 ; 220 ; 320),
- au moins deux roues (51, 52, 53 ; 151, 152, 153 ; 251, 251', 252, 253 ; 351, 352),
- un système de direction (60 ; 360),
- un moyen de flottaison (90 ; 190 ; 290 ; 390) assurant l'insubmersibilité dudit véhicule (10 ; 100 ; 200 ; 300) une fois celui-ci immergé dans l'eau,
- les surfaces de contact des roues (51, 52, 53 ; 151, 152, 153 ; 251, 251', 252, 253 ; 351, 352) reposant sur un sol ferme définissant un plan de référence (P), **caractérisé en ce que** le moyen de flottaison (90 ; 190 ; 290 ; 390) présente une ligne de flottaison (96 ; 196 ; 296 ; 396) inclinée par rapport à ce plan (P) de sorte qu'une fois le véhicule (10 ; 100 ; 200 ; 300) immergé, au moins une roue (52, 53 ; 151 ; 252, 253 ; 351) est déjaugée hors de l'eau sous l'effet de la pression exercée par l'eau sur ledit moyen de flottaison (90 ; 190 ; 290 ; 390).

2. Véhicule selon la revendication 1, dans lequel le moyen de flottaison (90 ; 190 ; 290 ; 390) comprend au moins un flotteur (91 ; 92 ; 191 ; 192 ; 193 ; 292, 293 ; 391) lié ou intégré au châssis (20 ; 120 ; 220 ; 320) et présentant ladite ligne de flottaison (96 ; 196 ; 296 ; 396).

3. Véhicule selon la revendication 2, dans lequel les roues (51, 52, 53 ; 151, 151', 152, 153) sont réparties, par rapport au sens de déplacement normal du véhicule vers l'avant, en au moins une roue arrière directrice (51 ; 251, 251') reliée au système de direction (60) et deux roues avant (52, 53 ; 252, 253), les roues avant (52, 53 ; 252, 253) étant totalement déjaugées hors de l'eau lorsque le véhicule (10 ; 200) est immergé.

4. Véhicule selon la revendication 3, dans lequel chaque roue arrière (51 ; 251, 251') est pleine pour former un gouvernail en position de flottaison du véhicule (10 ; 200), et suffisamment fine et profilée pour minimiser son sillage dans l'eau.

5. Véhicule selon la revendication 3 ou 4, dans lequel le moyen de flottaison (90 ; 290) comprend deux flotteurs creux (91, 92 ; 291, 292) longitudinaux disposés sous le châssis (20 ; 220).

6. Véhicule selon l'une quelconque des revendications 3 à 5, dans lequel le châssis (20 ; 220) est tubulaire et comprend des tubes longitudinaux latéraux (22, 23 ; 222, 223), un tube arrière (24 ; 224), un tube avant (25 ; 225) et un tube intermédiaire (26 ; 226) pour former un cadre sensiblement rectangulaire.

7. Véhicule selon la revendication 6, dans lequel un trampoline (80) est tendu entre les tubes (22, 23, 25, 26 ; 222, 223, 225, 226) du châssis tubulaire (20 ; 220) pour former une assise (82) multi positions.

8. Véhicule selon la revendication 6 ou 7, dans lequel le système de direction (60) comprend un palonnier (261) relié à un câble (262) en boucle fermée longeant les tubes (222, 223, 224, 225) du châssis et agissant sur les roues arrière (251, 251').

9. Véhicule selon la revendication 8, **caractérisé en ce qu'**il comprend deux roues arrière directrices (251, 251') liées cinématiquement entre elles à l'aide du câble (262) et deux roues avant (252, 253).

10. Véhicule selon l'une quelconque des revendications 3 à 9, dans lequel les roues avant (252, 253) sont intégrées dans le moyen de flottaison (290).

11. Véhicule selon l'une quelconque des revendications 3 à 7, dans lequel le système de direction (60) comprend un palonnier (61) réglable le long d'un rail (64) et relié à une fourche (55) de la roue arrière (51) par l'intermédiaire de câbles (62) tendus passant dans des anneaux (63).

12. Véhicule selon la revendication 1 ou 2, dans lequel les roues (151, 152, 153 ; 351, 352) sont réparties, par rapport au sens de déplacement normal du véhicule vers l'avant, en une roue avant directrice (151), et au moins une roue arrière (152, 153 ; 352), la roue avant (151 ; 351) étant totalement déjaugée hors de l'eau lorsque le véhicule (100) est immergé.

13. Véhicule selon la revendication 12, dans lequel le moyen de flottaison (190) et le châssis (120) forment une seule pièce creuse.

14. Véhicule selon la revendication 13, dans lequel une assise multi positions (182) est intégrée dans le châssis (120), notamment par moulage.

15. Véhicule selon l'une quelconque des revendications 12 à 14, dans lequel l'arrière du châssis (120) est munie d'un gouvernail (155) escamotable disposé sensiblement entre les roues arrière (152, 153).

16. Véhicule selon l'une quelconque des revendications 12 à 15, dans lequel les roues arrière (152, 153) sont intégrées dans le châssis (120) et/ou le moyen de flottaison (190).

17. Véhicule selon la revendication 12, **caractérisé en ce qu'**il comprend au moins une roue avant (351) reliée à un guidon (360), une roue arrière motrice (352), une selle (382), et un carénage (315) de sorte que ledit véhicule constitue un scooter amphibie transformable en scooter des mers ou en jet ski.

18. Véhicule selon l'une quelconque des revendications précédentes, dans lequel le moyen de flottaison (90 ; 190 ; 290 ; 390) et/ou le châssis (20 ; 120 ; 220 ; 320) est(sont) réalisé(s) en matériau plastique moulable, en particulier en matériau composite.

19. Véhicule selon l'une quelconque des revendications précédentes, **caractérisé en ce qu'**il comprend en outre au moins un moyen mécanique de propulsion.

20. Véhicule selon la revendication 19, dans lequel le moyen mécanique de propulsion est une hélice sous-marine ou une roue à aubes reliées à un moteur.

21. Véhicule selon la revendication 19 ou 20, dans lequel le moyen mécanique de propulsion est une hélice sub-marine reliée à un moteur.

22. Véhicule selon l'une quelconque des revendications précédentes, **caractérisé en ce qu'**il comprend également un pédalier ou un moteur relié à au moins une roue de propulsion du véhicule sur terre et/ou dans l'eau.

23. Véhicule selon l'une quelconque des revendications précédentes, **caractérisé en ce qu'**il comprend par ailleurs des suspentes et un cerf-volant de propulsion.

24. Véhicule selon l'une quelconque des revendications précédentes, dans lequel le châssis (120) est fermé par une coque de protection étanche à l'eau réalisée notamment en matière plastique transparente.

25. Véhicule selon l'une quelconque des revendications précédentes, dans lequel le châssis et/ou le moyen de flottaison présente(nt) au moins une dérive de stabilité.

26. Véhicule selon l'une quelconque des revendications précédentes, **caractérisé en ce qu'**il comprend en outre un pied de mât (30 ; 130 ; 230) destiné à recevoir un mât (234) supportant une voile (236).

27. Véhicule selon la revendication 26, **caractérisé en ce que** le pied de mât (30 ; 130 ; 230) reçoit le mât (234) d'une voile (236) standard de planche à voile équipée d'un wishbone (238).

## Claims

1. Rolling vehicle (10; 100; 200; 300) propelled by wind or another force, comprising at least:
- a rigid frame (20; 120; 220; 320),
- at least two wheels (51, 52, 53; 151, 152, 153; 251, 251', 252, 253; 351, 352),
- a steering system (60; 360),
- a flotation means (90; 190; 290; 390) to ensure that said vehicle (10; 100; 200; 300) will not be submersed once immersed in water,
the contact surfaces of the wheels (51, 52, 53; 151, 152, 153; 251, 251', 252, 253; 351, 352) defining a reference plane (P) when resting on solid ground, **characterised in that** the flotation means (90; 190; 290; 390) has a flotation line (96; 196; 296; 396) which is inclined with respect to this plane (P) so that once the vehicle (10; 100; 200; 300) is immersed, at least one wheel (52, 53; 151, 252, 253; 351) is tilted out of the water due to the effect of the pressure exerted by the water on said flotation means (90; 190; 290; 390).

2. Vehicle as claimed in claim 1, in which the flotation means (90; 190; 290; 390) comprises at least one float (91; 92; 191; 192; 193; 292; 293; 391) connected to or integral with the frame (20; 120; 220; 230) and incorporates said flotation line (96; 196; 296; 396).

3. Vehicle as claimed in claim 2, in which the wheels (51, 52, 53; 151, 151', 152, 153) are disposed towards the front by reference to the normal direction of displacement of the vehicle, split into at least one rear steering wheel (51; 251, 251') linked to the steering system (60) and two front wheels (52, 53; 252, 253), the front wheels (52, 53; 252, 253) being totally tilted out of the water when the vehicle (10; 200) is immersed.

4. Vehicle as claimed in claim 3, in which each rear wheel (51; 251, 251') is solid so as to form a rudder when the vehicle (10; 200) is in the flotation position, and is sufficiently fine and profiled to minimise its wake in the water.

5. Vehicle as claimed in claim 3 or 4, in which the flotation means (90; 290) comprises two longitudinal hollow floats (91, 92; 291, 292) disposed underneath the frame (20; 220).

6. Vehicle as claimed in any one of claims 3 to 5, in which the frame (20; 220) is tubular and comprises side longitudinal tubes (22, 23; 222, 223), a rear tube (24; 224), a front tube (25; 225) and an intermediate tube (26; 226) so as to form a substantially rectangular frame.

7. Vehicle as claimed in claim 6, in which a trampoline (80) is tensed between the tubes (22, 23, 25, 26; 222, 223, 225, 226) of the tubular frame (20; 220) so as to form a multi-position seat (82).

8. Vehicle as claimed in claim 6 or 7, in which the steering system (60) comprises a rudder bar (261) linked to a cable (262) running along the tubes (222, 223, 224, 225) of the frame in a closed loop and acting on the rear wheels (251, 251').

9. Vehicle as claimed in claim 8, **characterised in that** it comprises two rear steering wheels (251, 251') kinematically linked to one another by means of the cable (262) and two front wheels (252, 253).

10. Vehicle as claimed in any one of claims 3 to 9, in which the front wheels (252, 253) are integrated in the flotation means (290).

11. Vehicle as claimed in any one of claims 3 to 7, in which the steering system (60) comprises a rudder bar (61) which can be adjusted along a rail (64) and is linked to a fork (55) of the rear wheel (51) via tensed cables (62) extending through rings (63).

12. Vehicle as claimed in claim 1 or 2, in which the wheels (151, 152, 153; 351, 352) are disposed towards the front by reference to the normal direction of displacement of the vehicle, split into a front steering wheel (151) and at least one rear wheel (152, 153; 352), the front wheel (151, 351) being totally tilted out of the water when the vehicle (100) is immersed.

13. Vehicle as claimed in claim 12, in which the flotation means (190) and the frame (120) constitute a single hollow piece.

14. Vehicle as claimed in claim 13, in which a multi-position seat (182) is integrated in the frame (120), in particular by moulding.

15. Vehicle as claimed in any one of claims 12 to 14, in which the rear of the frame (120) is fitted with a rudder (155) mounted substantially between the rear wheels (152, 153) so that it can be retracted.

16. Vehicle as claimed in any one of claims 12 to 15, in which the rear wheels (152, 153) are integrated in the frame (120) and/or the flotation means (190).

17. Vehicle as claimed in claim 12, **characterised in that** it comprises at least one front wheel (351) linked to a handle bar (360), one rear driving wheel (352), a saddle (382) and a fairing (315) so that said vehicle constitutes an amphibious scooter which can be converted into a sea scooter or a jet ski.

18. Vehicle as claimed in any one of the preceding claims, in which the flotation means (90; 190; 290; 390) and/or the frame (20; 120; 220; 320) is/are made from mouldable plastic material, in particular composite material.

19. Vehicle as claimed in any one of the preceding claims, **characterised in that** it further comprises at least one mechanical propulsion means.

20. Vehicle as claimed in claim 19, in which the mechanical propulsion means is an undersea propeller or a paddle wheel connected to a motor.

21. Vehicle as claimed in claim 19 or 20, in which the mechanical propulsion means is an undersea propeller connected to a motor.

22. Vehicle as claimed in any one of the preceding claims, **characterised in that** it also comprises a pedal and gear mechanism or a motor connected to at least one propulsion wheel of the vehicle on land and/or in the water.

23. Vehicle as claimed in any one of the preceding claims, **characterised in that** it further comprises ropes and a propulsion kite.

24. Vehicle as claimed in any one of the preceding claims, in which the frame (120) is closed by a water-tight protective shell, in particular made from transparent plastic material.

25. Vehicle as claimed in any one of the preceding claims, in which the frame and/or the flotation means has/have at least one stability centreboard.

26. Vehicle as claimed in any one of the preceding claims, **characterised in that** it further comprises a mast foot (30; 130; 230) designed to receive a mast (234) supporting a sail (236).

27. Vehicle as claimed in claim 26, **characterised in that** the mast foot (30; 130; 230) receives the mast (234) of a standard sail (236) of a sailboard equipped with a wishbone (238).

## Patentansprüche

1. Rollfahrzeug (10; 100; 200; 300), welches durch Windkraft oder dergleichen angetrieben ist, umfassend wenigstens:
- ein starres Fahrgestell (20; 120; 220; 320),
- wenigstens zwei Räder (51, 52, 53; 151, 152, 153; 251, 251', 252, 253, 351, 352),
- ein Lenksystem (60; 360),
- ein Auftriebsmittel (90; 190; 290; 390), welches die Unsinkbarkeit des Fahrzeugs (10; 100; 200; 300) sicherstellt, wenn dieses in Wasser eintaucht,
wobei die Kontaktflächen der Räder (51, 52, 53; 151, 152, 153; 251, 251', 252, 253; 351, 352) auf einem geschlossenen Boden ruhen, welcher eine Bezugsebene (P) definiert, **dadurch gekennzeichnet, dass** das Auftriebsmittel (90; 190; 290; 390) eine Wasserlinie (96; 196; 296; 396) aufweist, welche im Verhältnis zu dieser Ebene (P) derart geneigt ist, dass sobald das Fahrzeug (10; 100; 200; 300) eintaucht, wenigstens ein Rad (52, 53; 151; 252, 253; 351) durch Wirkung des Drucks, welcher durch das Wasser auf das Auftriebsmittel (90; 190; 290; 390) ausgeübt wird, aus dem Wasser hochgetrieben wird.

2. Fahrzeug nach Anspruch 1, wobei das Auftriebsmittel (90; 190; 290; 390) wenigstens einen Schwimmer (91; 92; 191; 192; 193; 292, 293, 391) umfasst, welcher mit dem Fahrgestell (20; 120; 220; 320) verbunden oder darin integriert ist und die Wasserlinie (96; 196; 296; 396) aufweist.

3. Fahrzeug nach Anspruch 2, wobei die Räder (51, 52, 53; 151, 151', 152, 153) mit Bezug auf die normale Bewegungsrichtung des Fahrzeugs nach vorne aufgeteilt sind in wenigstens ein hinteres Lenkrad (51; 251, 251'), welches mit dem Lenksystem (60) verbunden ist, und zwei vordere Räder (52, 53; 252, 253), wobei die vorderen Räder (52, 53; 252, 253) vollständig aus dem Wasser hochgetrieben sind, wenn das Fahrzeug (10; 200) eingetaucht ist.

4. Fahrzeug nach Anspruch 3, wobei jedes hintere Rad (51; 251, 251') vollflächig ist, um in der Schwimmposition des Fahrzeugs (10; 200) ein Ruder zu bilden, und ausreichend fein und profiliert ist, um seine Wirbelbildung im Wasser zu minimieren.

5. Fahrzeug nach Anspruch 3 oder 4, wobei das Auftriebsmittel (90; 290) zwei hohle longitudinale Schwimmkörper (91, 92; 291, 292) umfasst, welche unter dem Fahrgestell (20; 220) angeordnet sind.

6. Fahrzeug nach einem der Ansprüche 3-5, wobei das Fahrgestell (20; 220) röhrenartig ist und longitudinale seitliche Rohre (22, 23; 222, 223), ein hinteres Rohr (24, 224), ein vorderes Rohr (25; 225) und ein Zwischenrohr (26; 226) umfasst, so dass ein im Wesentlichen rechtwinkliger Rahmen gebildet wird.

7. Fahrzeug nach Anspruch 6, wobei ein Trampolin (80) zwischen den Rohren (22, 23, 25, 26; 222, 223, 225, 226) des röhrenartigen Fahrgestells (20; 220) gehalten ist, um einen Mehrpositionssitz (82) zu bilden.

8. Fahrzeug nach Anspruch 6 oder 7, wobei das Lenksystem (60) einen Steuerknüppel (261) umfasst, welcher mit einem zu einer Schleife geschlossenen Kabel (262) verbunden ist, welches an den Rohren (222, 223, 224, 225) des Fahrgestells entlangläuft und auf die hinteren Räder (251, 251') einwirkt.

9. Fahrzeug nach Anspruch 8, **dadurch gekennzeichnet, dass** es zwei hintere Lenkräder (251, 251'), welche mit Hilfe des Kabels (262) kinematisch miteinander verbunden sind, und zwei vordere Räder (252, 253) umfasst.

10. Fahrzeug nach einem der Ansprüche 3-9, wobei die vorderen Räder (252, 253) in dem Auftriebsmittel (290) integriert sind.

11. Fahrzeug nach einem der Ansprüche 3-7, wobei das Lenksystem (60) einen Steuerknüppel (61) umfasst, welcher entlang einer Schiene (64) einstellbar ist und über Kabel (62), welche durch Ringe (63) verlaufend gehalten sind, mit einer Gabel (55) des hinteren Rads (51) verbunden ist.

12. Fahrzeug nach Anspruch 1 oder 2, wobei die Räder (151, 152, 153; 351, 352) mit Bezug auf die normale Bewegungsrichtung des Fahrzeugs nach vorne aufgeteilt sind in ein vorderes Lenkrad (151) und wenigstens ein hinteres Rad (152, 153; 352), wobei das vordere Rad (151, 351) vollständig aus dem Wasser hochgetrieben ist, wenn das Fahrzeug (100) eingetaucht ist.

13. Fahrzeug nach Anspruch 12, wobei das Auftriebsmittel (190) und das Fahrgestell (120) ein einziges hohles Teil bilden.

14. Fahrzeug nach Anspruch 13, wobei ein Mehrpositionssitz (182) in dem Fahrgestell (120) integriert ist, insbesondere durch Formguss.

15. Fahrzeug nach einem der Ansprüche 12-14, wobei das Hinterteil des Fahrgestells (120) mit einem Ruder (155) versehen ist, welches einziehbar im Wesentlichen zwischen den hinteren Rädern (152, 153) angeordnet ist.

16. Fahrzeug nach einem der Ansprüche 12-15, wobei die hinteren Räder (152, 153) in dem Fahrgestell (120) und/oder dem Auftriebsmittel (190) integriert sind.

17. Fahrzeug nach Anspruch 12, **dadurch gekennzeichnet, dass** es wenigstens ein vorderes Rad (351), welches mit einem Lenker (360) verbunden ist, ein hinteres Antriebsrad (352), einen Sattel (382) und eine Verkleidung (315) umfasst, so dass das Fahrzeug einen Amphibienscooter bildet, welcher in einen Seescooter oder einen Jetski transformierbar ist.

18. Fahrzeug nach einem der vorhergehenden Ansprüche, wobei das Auftriebsmittel (90; 190; 290; 390) und/oder das Fahrgestell (20; 120; 220; 320) aus einem formbaren Kunststoffmaterial, insbesondere aus einem Verbundmaterial, realisiert ist/sind.

19. Fahrzeug nach einem der vorhergehenden Ansprüche, **dadurch gekennzeichnet, dass** es außerdem wenigstens ein mechanisches Antriebsmittel umfasst.

20. Fahrzeug nach Anspruch 19, wobei das mechanische Antriebsmittel eine Unterwasserschraube oder ein mit einem Motor verbundenes Schaufelrad ist.

21. Fahrzeug nach Anspruch 19 oder 20, wobei das mechanische Antriebsmittel eine mit einem Motor verbundene Unterwasserschraube ist.

22. Fahrzeug nach einem der vorhergehenden Ansprüche, **dadurch gekennzeichnet, dass** es außerdem eine Tretkurbel oder einen Motor umfasst, welche bzw. welcher mit wenigstens einem Rad zum Antrieb des Fahrzeugs auf der Erde und/oder im Wasser verbunden ist.

23. Fahrzeug nach einem der vorhergehenden Ansprüche, **dadurch gekennzeichnet, dass** es außerdem Fangleinen und einen Antriebsdrachen umfasst.

24. Fahrzeug nach einem der vorhergehenden Ansprüche, wobei das Fahrgestell (120) durch eine wasserdichte Schutzschale geschlossen ist, welche insbesondere aus einem transparenten Kunststoffmaterial realisiert ist.

25. Fahrzeug nach einem der vorhergehenden Ansprüche, wobei das Fahrgestell und/oder das Auftriebsmittel wenigstens ein Stabilisatorschwert aufweist/aufweisen.

26. Fahrzeug nach einem der vorhergehenden Ansprüche, **dadurch gekennzeichnet, dass** es außerdem einen Mastfuß (30; 130; 230) umfasst, welcher dazu bestimmt ist, einen Mast (234) aufzunehmen, welcher ein Segel (236) trägt.

27. Fahrzeug nach Anspruch 26, **dadurch gekennzeichnet, dass** der Mastfuß (30; 130; 230) den Mast (234) eines mit einem Wishbone (238) ausgestatteten Standard-Windsurfsegels (236) aufnimmt.
